# EUROPÄISCHE PATENTSCHRIFT

(11) **EP 3 902 166 B1**
(45) Veröffentlichungstag und Bekanntmachung des Hinweises auf die Patenterteilung: **23.03.2022**
(21) Anmeldenummer: 20170666.0
(22) Anmeldetag: 21.04.2020
(51) Int. Cl.: H04J 3/06, G06F 1/14, G06F 11/20

(54) **FEHLERTOLERANTER ZEITSERVER FÜR EIN ECHTZEITCOMPUTERSYSTEM**
FAULT TOLERANT TIME SERVER FOR A REAL-TIME COMPUTER SYSTEM
SERVEUR D'HORLOGE TOLÉRANT AUX ERREURS POUR UN SYSTÈME INFORMATIQUE EN TEMPS RÉEL

(43) Veröffentlichungstag der Anmeldung: 27.10.2021
(73) Patentinhaber: TTTech Computertechnik Aktiengesellschaft, 1040 Wien (AT)
(72) Erfinder: Kopetz, Hermann, 2500 Baden (AT)
(74) Vertreter: Patentanwaltskanzlei Matschnig & Forsthuber OG

(56) Entgegenhaltungen:
- WO-A1-2011/123877
- WO-A1-2013/152379
- GEORG GADERER ET AL: "Master failures in the Precision Time Protocol", PRECISION CLOCK SYNCHRONIZATION FOR MEASUREMENT, CONTROL AND COMMUNICATION, 2008. ISPCS 2008. IEEE INTERNATIONAL SYMPOSIUM ON, IEEE, PISCATAWAY, NJ, USA, 22. September 2008 (2008-09-22), Seiten 59-64, XP031354124, ISBN: 978-1-4244-2274-6
- HERMANN KOPETZ ET AL: "Combination of clock-state and clock-rate correction in fault-tolerant distributed systems", REAL-TIME SYSTEMS, KLUWER ACADEMIC PUBLISHERS, BO, Bd. 33, Nr. 1-3, 1. Juli 2006 (2006-07-01) , Seiten 139-173, XP019409400, ISSN: 1573-1383, DOI: 10.1007/S11241-006-6885-9
- PFEIFER H ET AL: "Formal verification for time-triggered clock synchronization", DEPENDABLE COMPUTING FOR CRITICAL APPLICATIONS 7, 1999 SAN JOSE, CA, USA 6-8 JAN. 1999, PISCATAWAY, NJ, USA,IEEE, US, 6. Januar 1999 (1999-01-06), Seiten 207-226, XP010366426, DOI: 10.1109/DCFTS.1999.814297 ISBN: 978-0-7695-0284-7
- GEORG GADERER ET AL: "Improving Fault Tolerance in High-Precision Clock Synchronization", IEEE TRANSACTIONS ON INDUSTRIAL INFORMATICS, IEEE SERVICE CENTER, NEW YORK, NY, US, Bd. 6, Nr. 2, 1. Mai 2010 (2010-05-01), Seiten 206-215, XP011334313, ISSN: 1551-3203, DOI: 10.1109/TII.2010.2044580

## Beschreibung

Die Erfindung betrifft ein Verfahren zur Bereitstellung einer fehlertoleranten globalen Zeit durch einen Zeitserver in einem verteilten Echtzeitcomputersystem, wobei der Zeitserver vier *Komponenten* umfasst, eine erste Komponente, eine zweite Komponente, eine dritte Komponente, und eine vierte Komponente, wobei zur Übertragung von Nachrichten die erste Komponente mit der zweiten und der dritten Komponente jeweils über einen bi-direktionalen Kommunikationskanal verbunden ist, und die vierte Komponente mit der zweiten und der dritten Komponente jeweils über einen bi-direktionalen Kommunikationskanal verbunden ist, und wobei jede der vier Komponenten einen Oszillator und einen lokalen Tick-Zähler, z.B. einen internen Computer mit einem Oszillator und einem lokalen Tick-Zähler, umfasst.

Weiters betrifft die Erfindung einen Zeitserver zur Bereitstellung einer fehlertoleranten globalen Zeit für ein verteiltes Echtzeitcomputersystem, wobei der Zeitserver vier *Komponenten* umfasst, eine erste Komponente, eine zweite Komponente, eine dritte Komponente, und eine vierte Komponente, wobei zur Übertragung von Nachrichten die erste Komponente mit der zweiten und der dritten Komponente jeweils über einen bi-direktionalen Kommunikationskanal verbunden ist, und die vierte Komponente mit der zweiten und der dritten Komponente jeweils über einen bi-direktionalen Kommunikationskanal verbunden ist, und wobei jede der vier Komponenten einen Oszillator und einen lokalen Tick-Zähler, z.B. einen internen Computer mit einem Oszillator und einem lokalen Tick-Zähler, umfasst.

Außerdem betrifft die Erfindung ein Echtzeitcomputersystem umfassend einen solchen Zeitserver sowie externe Empfänger, welche von dem Zeitserver mit einer globalen Zeit versorgt werden.

Die Erfindung betrifft ein Verfahren zur Bereitstellung einer fehlertoleranten globalen Zeit durch einen Zeitserver in einem verteilten Echtzeitcomputersystem.

Weiters betrifft die Erfindung einen Zeitserver zur Bereitstellung einer fehlertoleranten globalen Zeit.

Die Erfindung liegt im Bereich der Computertechnik. Die Erfindung betrifft ein Verfahren und einen Zeitserver zur fehlertoleranten Synchronisation von Uhren in einem verteilten Echtzeitcomputersystem.

In vielen verteilten Echtzeitcomputersystemen, die zur Automatisierung von technischen Prozessen eingesetzt werden, ist die Einführung einer globalen Zeit, die in allen Computern des verteilten Echtzeitcomputersystemen verfügbar ist, erforderlich. In sicherheitskritischen Anwendungen, die eine sehr geringe Ausfallwahrscheinlichkeit aufweisen müssen, muss diese globale Zeit fehlertolerant sein.

Ein eingangs beschriebenes Verfahren ist aus GEORG GADERER ET AL: "Master failures in the Precision Time Protocol", PRECISION CLOCK SYNCHRONIZATION FOR MEASUREMENT, CONTROL AND COMMUNICATION, 2008. ISPCS 2008. IEEE INTERNATIONAL SYMPOSIUM ON, IEEE, PISCATAWAY, NJ, USA, 22. September 2008 (2008-09-22), Seiten 59-64, bekannt.

Weiterer Stand der Technik auf diesem Gebiet ist beschrieben in
- HERMANN KOPETZ ET AL: "Combination of clock-state and clockrate correction in fault-tolerant distributed systems", REAL-TIME SYSTEMS, KLUWER ACADEMIC PUBLISHERS, BO, Bd. 33, Nr. 1-3, 1. Juli 2006 (2006-07-01), Seiten 139-173,
- PFEIFER H ET AL: "Formal verification for time-triggered clock synchronization", EPA Form 1703 01.91 TRIDEPENDABLE COMPUTING FOR CRITICAL APPLICATIONS 7, 1999 SAN JOSE, CA, USA 6-8 JAN. 1999, PISCATAWAY, NJ, USA,IEEE, US, 6. Januar 1999 (1999-01-06), Seiten 207-226,
- GEORG GADERER ET AL: "Improving Fault Tolerance in HighPrecision Clock Synchronization", IEEE TRANSAGTIONS ON INDUSTRIAL INFORMATICS, IEEE SERVICE CENTER, NEW YORK, NY, US, Bd. 6, Nr. 2, 1. Mai 2010 (201 0-05-01 ), Seiten 206-215, sowie
- WO 2011/123877 A1.

Es ist eine Aufgabe der vorliegenden Erfindung, ein Verfahren und einen Zeitserver bereitzustellen, mit welchen eine fehlertolerante Zeit aufgebaut und allen Computern des verteilten Echtzeitcomputersystems -den *externen Empfängern-* zur Verfügung gestellt werden kann.

Diese Aufgabe wird mit einem eingangs genannten Verfahren dadurch gelöst, dass erfindungsgemäß nach einem Power-up der lokale Tick-Zähler jeder Komponente mit einem identischen Wert, vorzugsweise dem Wert Null initialisiert wird, wobei der Wert des lokalen Tick-Zählers einer Komponente in jeder Periode des Oszillators der Komponente um einen festen Wert, vorzugsweise um den Wert 1, erhöht wird, wobei in einer Start-up Phase *nach Power-up* des Zeitservers eine der vier Komponenten, z.B. die erste Komponente, eine *Start-up Nachricht* mit einem aktuellen Stand ihres lokalen Tick-Zählers zum Zeitpunkt des Sendens der *Start-up Nachricht* an die anderen Komponenten sendet, und wobei jeder Empfänger der Start-up Nachricht seinen lokalen Tick-Zähler auf den in der Start-up Nachricht enthaltenen Wert, korrigiert um eine *a priori* bekannte Transportverzögerung der Start-up Nachricht, setzt, und wobei zu *a priori* festgelegten periodischen, *internen Synchronisationszeitpunkten* jede der vier Komponenten eine *interne Synchronisationsnachricht,* die den Stand ihres lokalen Tick-Zählers zum Zeitpunkt des Sendens der *internen Synchronisationsnachricht* enthält, gleichzeitig an die anderen drei Komponenten sendet, und wobei jeder Empfänger einer *internen Synchronisationsnachricht* den Stand seines lokalen Tick-Zählers zum Empfangszeitpunkt der *internen Synchronisationsnachricht* festhält, und die ZeitDifferenz zwischen dem in der *internen Synchronisationsnachricht* enthaltenen Sendezeitpunkt und dem festgehaltenen Empfangszeitpunkt der *internen Synchronisationsnachricht,* korrigiert um die *a priori* bekannte Verzögerung der *internen Synchronisationsnachricht,* ermittelt, und wobei jeder interne Computer einer Komponente aus diesen Zeitdifferenzen entsprechend einem fehlertoleranten Uhrensynchronisations-Algorithmus einen Korrekturterm für den in seiner Komponente enthaltenen Tick-Zähler ermittelt und den Stand des lokalen Tick-Zählers um diesen Korrekturterm korrigiert, und wobei zwei der vier Komponenten, z.B. die erste Komponente und die dritte Komponente, je eine *externe Synchronisationsnachricht,* die einen *a priori* festgelegten *externen Empfangszeitpunkt* dieser *externen Synchronisationsnachricht* enthält, bilden, wobei beide externen Synchronisationsnachrichten denselben externen Empfangszeitpunkt enthalten, und diese *externen* Synchronisationsnachrichten gleichzeitig zu *a priori* festgelegten periodischen *externen Synchronisationszeitpunkten* jeweils über einen Kommunikationskanal direkt an eine der anderen Komponenten, aber nicht an dieselbe der beiden anderen Komponenten, senden, z.B. die erste Komponente an die zweite Komponente und die dritte Komponente an die vierte Komponente, und wobei jede der Komponenten des Zeitservers, an welche eine externe Synchronisationsnachricht gesendet wurde, überprüft, ob der in der empfangenen *externen Synchronisationsnachricht* enthaltene *externe Empfangszeitpunkt* gemessen zum Stand ihres lokalen Tick-Zählers zum Zeitpunkt des Empfangs der externen Synchronisationsnachricht so gesetzt ist, wie es durch eine a *priori Planung* des externen Synchronisationszeitpunktes und des externen Empfangszeitpunktes vorgeben ist,
- und falls dies nicht der Fall ist, die *externe Synchronisationsnachricht* verwirft,
- und falls dies der Fall ist, die externe Synchronisationsnachricht über einen externen Kommunikationskontroller der Komponente an einen externen Empfänger zu einem, insbesondere a priori festgelegten Zeitpunkt, der sicher stellt, dass die *externe Synchronisationsnachricht* zu dem in der *externen Synchronisationsnachricht* enthaltenen *externen Empfangszeitpunkt* beim externen Empfänger eintrifft, weiterleitet,
und wobei jeder externe Empfänger den Zeitpunkt des Empfangs der ersten eintreffenden *externen Synchronisationsnachricht* mit seiner lokalen Uhr festhält und anschließend den Stand seiner lokalen Uhr um die Differenz zwischen dem festgehaltenen Zeitpunkt des Empfangs der *externen Synchronisationsnachricht* und dem in der *externen Synchronisationsnachricht* enthaltenen externen Empfangszeitpunkt korrigiert.

Weiters wird diese Aufgabe mit einem eingangs genannten Zeitserver gelöst, wobei erfindungsgemäß nach einem Power-up der lokale Tick-Zähler jeder Komponente mit einem identischen Wert, vorzugsweise dem Wert Null initialisiert wird, wobei der Wert des lokalen Tick-Zählers einer Komponente in jeder Periode des Oszillators der Komponente um einen festen Wert, vorzugsweise um den Wert 1, erhöht wird, wobei in einer Start-up Phase *nach Power-up* des Zeitservers eine der vier Komponenten, z.B. die erste Komponente, dazu eingerichtet ist, eine *Start-up Nachricht* mit einem aktuellen Stand ihres lokalen Tick-Zählers zum Zeitpunkt des Sendens der *Start-up Nachricht* an die anderen Komponenten zu senden, und wobei jeder Empfänger der Start-up Nachricht dazu eingerichtet ist, seinen lokalen Tick-Zähler auf den in der Start-up Nachricht enthaltenen Wert, korrigiert um eine *a priori* bekannte Transportverzögerung der Start-up Nachricht, zu setzen, und wobei jede Komponente dazu eingerichtet, zu *a priori* festgelegten periodischen, *internen Synchronisationszeitpunkten* eine *interne Synchronisationsnachricht,* die den Stand ihres lokalen Tick-Zählers zum Zeitpunkt des Sendens der *internen Synchronisationsnachricht* enthält, gleichzeitig an die anderen drei Komponenten zu senden, und wobei jeder Empfänger einer *internen Synchronisationsnachricht* dazu eingerichtet ist, den Stand seines lokalen Tick-Zählers zum Empfangszeitpunkt der *internen Synchronisationsnachricht* festzuhalten, und die ZeitDifferenz zwischen dem in der *internen Synchronisationsnachricht* enthaltenen Sendezeitpunkt und dem festgehaltenen Empfangszeitpunkt der *internen Synchronisationsnachricht,* korrigiert um die *a priori* bekannte Verzögerung der *internen Synchronisationsnachricht,* zu ermitteln, und wobei jeder interne Computer einer Komponente dazu eingerichtet ist, aus diesen Zeitdifferenzen entsprechend einem fehlertoleranten Uhrensynchronisations-Algorithmus einen Korrekturterm für den in seiner Komponente enthaltenen Tick-Zähler zu ermitteln und den Stand des lokalen Tick-Zählers um diesen Korrekturterm zu korrigieren, und wobei zwei der vier Komponenten, z.B. die erste Komponente und die dritte Komponente, dazu eingerichtet sind, je eine *externe Synchronisationsnachricht,* die einen *a priori* festgelegten *externen Empfangszeitpunkt* dieser *externen Synchronisationsnachricht* enthält, zu bilden, wobei beide externen Synchronisationsnachrichten denselben externen Empfangszeitpunkt enthalten, und diese *externen* Synchronisationsnachrichten gleichzeitig zu *a priori* festgelegten periodischen *externen Synchronisationszeitpunkten* jeweils über einen Kommunikationskanal direkt an eine der anderen Komponenten, aber nicht an dieselbe der beiden anderen Komponenten, zu senden, z.B. die erste Komponente an die zweite Komponente und die dritte Komponente an die vierte Komponente, und wobei jede der Komponenten des Zeitservers, an welche eine externe Synchronisationsnachricht gesendet wurde, dazu eingerichtet ist zu überprüfen, ob der in der empfangenen *externen Synchronisationsnachricht* enthaltene *externe Empfangszeitpunkt* gemessen zum Stand ihres lokalen Tick-Zählers zum Zeitpunkt des Empfangs der externen Synchronisationsnachricht so gesetzt ist, wie es durch eine a *priori Planung* des externen Synchronisationszeitpunktes und des externen Empfangszeitpunktes vorgeben ist,
- und falls dies nicht der Fall ist, dazu eingerichtet ist, die *externe Synchronisationsnachricht* zu verwerfen,
- und falls dies der Fall ist, dazu eingerichtet ist, die externe Synchronisationsnachricht über einen externen Kommunikationskontroller der Komponente an einen externen Empfänger zu einem, insbesondere a priori festgelegten Zeitpunkt, der sicher stellt, dass die *externe Synchronisationsnachricht* zu dem in der *externen Synchronisationsnachricht* enthaltenen *externen Empfangszeitpunkt* beim externen Empfänger eintrifft, weiterzuleiten.

Die externe Empfänger des Echtzeitcomputersystems halten den Zeitpunkt des Empfangs der ersten eintreffenden *externen Synchronisationsnachricht* mit ihren lokalen Uhr fest korrigieren anschließend den Stand ihrer lokalen Uhr um die Differenz zwischen dem festgehaltenen Zeitpunkt des Empfangs der *externen Synchronisationsnachricht* und dem in der *externen Synchronisationsnachricht* enthaltenen externen Empfangszeitpunkt.

Der fehlertolerante Zeitserver besteht aus mindestens vier unabhängigen internen Komponenten. Eine, insbesondere jede interne Komponente beinhaltet einen Oszillator, der nach jeder Schwingung einen *Tick* generiert, einen Tick-Zähler, insbesondere einen Computer mit einem Oszillator und einem Tick-Zähler, sowie eine Software zur Erstellung einer globalen Zeit aus den Tick-Zählern der Komponenten. Die internen Komponenten sind mittels bi-direktionaler Kommunikationskanäle zur Übertragung von Nachrichten verbunden.

Die Verbindungen des Zeitservers nach außen, zu den Computern des verteilten Echtzeitsystems sind vorzugsweise unidirektional, um zu verhindern, dass eine fehlerhafte Nachricht -eine Nachricht eines *Intruders* - von außen in den Zeitserver eindringen kann.

Unmittelbar nach Power-up wird in der *Start-up Phase* des Verfahrens, vorzugsweise mittels eines zentralen Master-Algorithmus [siehe Kop11, S. 68], der in einer der Komponenten des Zeitservers abläuft, eine synchronisierte Zeit innerhalb des Zeitservers aufgebaut. Diese interne Synchronisation wird in der Folge durch einen verteilten fehlertoleranten UhrenSynchronisationsalgorithmus [z.B. den FTA Algorithmus, siehe Kop11, S. 69] aufrechterhalten.

Nach dem Ende der Start-up Phase werden zu *a priori* festgelegten periodisch wiederkehrenden Zeitpunkten von dem Zeitserver gleichzeitig zwei externe Synchronisationsnachrichten an die Computer des verteilten Echtzeitcomputersystems gesendet. Diese externen Synchronisationsnachrichten haben die *fail-silent Eigenschaft,* d.h., sie sind entweder *richtig* oder *erkennbar falsch.*

Im Folgenden werden die folgenden **Begriffsdefinitionen** getroffen:
**bi-direktionaler Kommunikationskanal:** Ein Kommunikationskanal, auf dem Nachrichten in beide Richtungen übertragen werden können.

**Computer eines Echtzeitsystems:** Einer der Vielzahl von Computern des verteilten Echtzeitcomputersystem, der vom Zeitserver Synchronisationsnachrichten empfängt. Synonym zu *externer Empfänger.*

**Empfänger einer Nachricht (Synchronisationsnachricht):** Komponente des Zeitservers, welche die Nachricht von einer anderen Komponente dieses Zeitservers erhält.

**externe Synchronisationsnachricht:** Eine Synchronisationsnachricht zur Synchronisation der Uhren außerhalb eines Zeitservers. Eine externe Synchronisationsnachricht muss erfindungsgemäß *fail-silent sein,* d.h. sie ist entweder richtig oder wird als unrichtig erkannt. Die Fehlererkennung einer im Wertebereich unrichtigen Synchronisationsnachricht kann durch die Überprüfung einer elektronischen Unterschrift, die in der externen Synchronisationsnachricht enthalten ist, erfolgen.

**externer Empfänger:** jeder Computer des verteilten Echtzeitcomputersystems, dessen Uhr durch externe Synchronisationsnachrichten, die periodisch vom Zeitserver gesendet werden, mit der globalen Zeit synchronisiert wird.

**externer Empfangszeitpunkt:** Der *a priori* festgelegte Zeitpunkt, zu dem eine korrekte/richtige externe Synchronisationsnachricht beim externen Empfänger eintrifft und der in einer Payload der externen Synchronisationsnachricht enthalten ist.

**externer Synchronisationszeitpunkt:** ein periodisch wiederkehrender Zeitpunkt, der im Rahmen des Systementwurfs festgelegt wird und zu dem eine externe Synchronisationsnachricht von einer Komponente des Zeitservers zu einer anderen internen Komponente des Zeitservers gesendet wird. Die externe Synchronisationsnachricht wird genau nur dieser einen internen Komponente zugesendet, wobei letztere außerdem von keinen anderen internen Komponenten des Zeitservers externe Synchronisationsnachrichten erhält. Die (interne) Übertragung der externen Synchronisationsnachrichten zwischen zwei Komponenten des Zeitservers erfolgt *direkt* über eine Kommunikationsleitung, welche die beiden Komponenten direkt, ohne den Umweg über andere Komponenten verbindet.

**Fehlerhypothese**: Die Annahmen über die zu tolerierenden Fehler in einem fehlertoleranten Computersystem [Kop11, S. 154].

**fehlertoleranter Uhrensynchronisations-Algorithmus:** Ein Algorithmus zur fehlertoleranten Synchronisation der Uhren in einem Verteilten Computersystem [Kop11, S.69].

**festgehaltener Empfangszeitpunkt**: Der Zeitpunkt des Empfangs einer externen Synchronisationsnachricht, gemessen mit der Uhr des externen Empfängers. Die Genauigkeit der Messung des festgehaltene Empfangszeitpunkt kann durch einen Hardwaremechanismus verbessert werden.

**Globale Zeit**: Die vom Zeitserver übermittelte Zeit, deren entsprechende Ticks bei allen externen Empfängern innerhalb einer definierten *Präzision* liegen (siehe [Kop11, S. 55] zum Begriff der Präzision).

**GPS Zeit**: Ein weltweites, mit der SI Sekunde synchronisiertes Zeitsignal, das vom GPS System ausgestrahlt wird und von einem GPS Empfänger empfangen werden kann [Dan97].

**GPS Empfänger (Receiver)**: Eine elektronische Baueinheit, die Satellitensignale von GPS Satelliten empfängt und die ein Zeitsignal (ausgedrückt in SI Sekunden) an den Zeitserver, insbesondere an die an den GPS Empfänger angeschlossenen Komponenten des Zeitservers übergibt [Dan97].

**gültige externe Synchronisationsnachricht*:*** Eine externe Synchronisationsnachricht ist *gültig,* wenn der Inhalt der Nachricht mit der in der Nachricht enthaltenen Signatur übereinstimmt.

**interne Synchronisationsnachricht:** Eine Synchronisationsnachricht zur internen Synchronisation der Tick-Zähler der Komponenten innerhalb eines Zeitservers. Interne

Synchronisationsnachrichten werden zwischen den internen Komponenten eines Zeitservers übertragen.

**interner Synchronisationszeitpunkt**: ein periodisch wiederkehrender Zeitpunkt, der im Rahmen des Systementwurfs festgelegt wird und zu dem eine interne Synchronisationsnachricht gesendet wird.

**Kommunikationskontroller:** die Baueinheit innerhalb eines Computers, welche die Verbindung zwischen einem externen Kommunikationskanal und dem Speicher des Computers herstellt und die die Abwicklung des Kommunikationsprotokolls vornimmt.

**Komponente:** Ein Computer mit einem Oszillator, einen Tick-Zähler und der notwendigen Software innerhalbe des Zeitservers.

**SI-Sekunde**: Internationaler Standard der Sekunde [Tay01].

**Start-up Nachricht:** Eine Nachricht innerhalb des Zeitservers zur internen Uhrensynchronisation, die in der Start-up Phase gesendet wird.

**Start-up Phase:** Ein Zeitintervall unmittelbar nach dem *Power-up* der internen Komponenten des Zeitservers. Während der Start-up Phase werden die Tick-Zähler der Komponenten mittels eines zentralen Master Algorithmus [Kop11, S.68] synchronisiert.

**unabhängige Kommunikationskontroller des Zeitservers**: zwei Kommunikationskontroller des Zeitservers sind unabhängig, wenn sie auf bzw. in unterschiedlichen internen Komponenten angeordnet sind.

**Zeitserver:** Ein Apparat bzw. eine Vorrichtung, umfassend mindestens vier Komponenten zum Aufbau einer fehlertoleranten globalen Zeit.

Vorteilhafte Ausgestaltungen des erfindungsgemäßen Verfahrens und des erfindungsgemäßen Zeitservers, die alleine oder in beliebiger Kombination miteinander vorgesehen sein können, sind im Folgenden beschrieben:
- Komponenten, welche eine *externe Synchronisationsnachricht erzeugen,* können diese externe Synchronisationsnachricht mit einer elektronischen Unterschrift versehen und der Empfänger dieser externen Synchronisationsnachricht kann auf Basis dieser elektronischen Unterschrift überprüfen, ob die Nachricht gültig ist und die Nachricht verwerfen, wenn sie ungültig ist.
- Die erste Komponente kann mit der vierten Komponente über einen bi-direktionalen Kommunikationskanal und/oder die zweite Komponente mit der dritten Komponenten über einen bi-direktionalen Kommunikationskanal verbunden sein. Ohne diese zusätzlichen bi-direktionalen Kommunikationskanäle, welche diagonal einander gegenüberliegende Komponenten miteinander verbinden, muss eine zweistufige Übertragung der internen Nachrichten (beispielsweise muss eine Nachricht von der ersten Komponente an die vierte Komponente über die zweite oder dritte Komponente laufen) in Kauf genommen und die dadurch auftretenden Verzögerung korrigiert werden. Durch die zusätzlichen bi-direktionalen Kommunikationskanäle kann dies vermieden werden.
- Der Zeitserver kann einen GPS-Empfänger umfassen oder beinhalten, und eine über den GPS-Empfänger empfangene externe GPS-Zeit kann periodisch an eine oder mehrere der Komponenten des Zeitservers weitergeleitet werden.
- Von dem Zeitserver, z.B. von einer Komponente des Zeitservers, die mit dem GPS-Empfänger verbunden ist, kann die Feldstärke eines auf den GPS-Empfänger einfallenden Signals, mit welchem die externe GPS-Zeit an den GPS-Empfänger übertragen wird, überprüfen, oder die angebotene Zeit auf sprunghafte Änderungen untersuchen.
- Der zeitliche Abstand zwischen zwei externen Synchronisationsnachrichten entspricht vorzugsweise einer Potenz der SI-Sekunde.
- Externe Synchronisationsnachrichten können jeweils ein Datenfeld umfassen, in dem Daten über den internen Zustand des Zeitservers enthalten sind.
- Der Zeitserver kann in zwei physikalisch getrennte Subsysteme unterteilt sein, wobei jedes Subsysteme eine Komponente umfasst, welche externe Synchronisationsnachrichten erzeugt und diese vorzugsweise signiert, sowie jeweils eine weitere Komponente umfasst, welche diese externe Synchronisationsnachricht, die von der anderen Komponente ihres Sub-Systems generiert wird, empfängt, und wobei letztere Komponente jedes Sub-Systems dazu eingerichtet ist, die externe Synchronisationsnachricht an einen externen Empfänger zu senden.
- Beide Subsysteme des Zeitservers können im physikalischen Raum derart voneinander getrennt sein, beispielsweise so weit voneinander entfernt angeordnet, sein, dass eine physikalische Fehlerursache nur eines der beiden Subsysteme treffen kann.
- Die beiden Subsysteme können über je eine unabhängige Stromversorgung verfügen.
- In jedem der getrennten Subsysteme kann ein GPS Empfänger enthalten oder jedem Subsystem ein eigener GPS Empfänger zugeordnet sein.

Im Folgenden ist die Erfindung an Hand der Zeichnung näher erörtert. In dieser zeigt
Fig. 1 einen erfindungsgemäßen Zeitserver mit vier internen Komponenten,
Fig. 2 die Struktur eines verteilten Echtzeitcomputersystems mit vier Computern, die von einem fehlertoleranten Zeitserver gemäß Figur 1 mit periodischen externen Synchronisationsnachrichten versorgt werden,
Fig. 3 eine weitere Ausgestaltungsmöglichkeit eines erfindungsgemäßen Zeitservers,
Fig. 4 einen Zeitserver mit einem Empfänger zum Empfang von GPS Signalen zur Synchronisation der globalen Zeit mit der GPS Zeit, und
Fig. 5 einen erfindungsgemäßen Zeitserver gemäß Figur 4 mit Sensoren zur Erfassung des Zustandes der Umwelt.

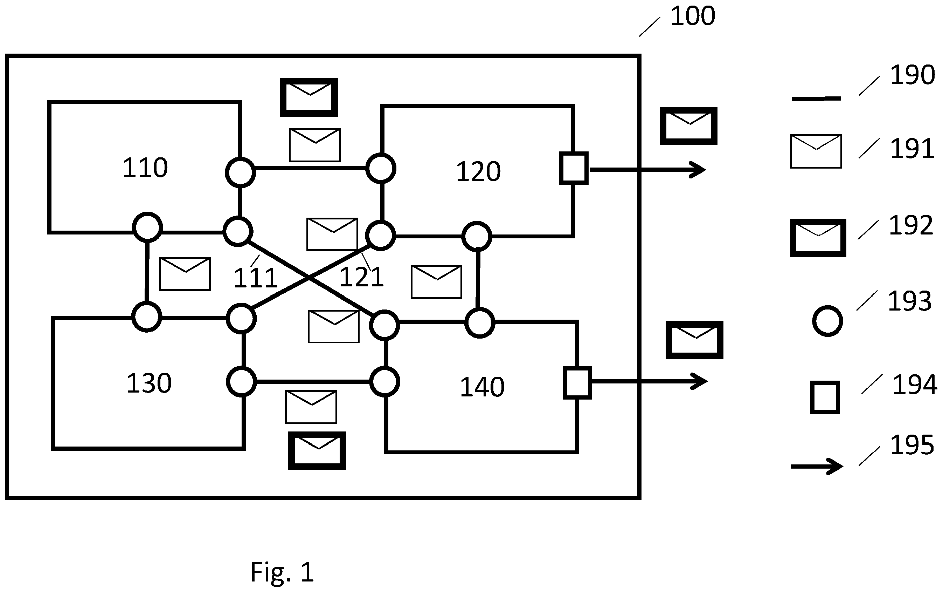

**Figur 1** zeigt einen Zeitserver **100** mit vier *Komponenten* **110**, **120**, **130**, **140**, einer ersten Komponente **110,** einer zweiten Komponenten **120,** einer dritten Komponente **130** und einer vierten Komponenten **140.**

Die erste Komponente **110** ist mit jeder der anderen drei Komponenten, d.h. mit der zweiten, dritten und vierten Komponente **120, 130, 140,** die zweite Komponente **120** mit jeder der anderen drei Komponenten (erste, dritte und vierte) **110**, **130**, **140**, die dritte Komponente **130** mit jeder der anderen drei Komponenten (erste, zweite und vierte) **110, 120, 140** und die vierte Komponente **140** mit jeder der anderen drei Komponenten (erste, zweite dritte) **110, 120**, **130** über je einen *bi-direktionalen Kommunikationskanal* **190, 111, 121** zur Übertragung von Nachrichten mittels *interner Kommunikationskontroller* **193** der jeweiligen Komponenten verbunden.

In **Figur 1** wird zwischen zwei Arten von Nachrichten unterschieden, *internen Synchronisationsnachrichten* **191** und *externen Synchronisationsnachrichten* **192.** Die externen Synchronisationsnachrichten **192** sind vorzugsweise signiert.

In dem Beispiel gemäß **Figur 1** verfügt jede Komponente über drei interne Kommunikationskontroller **193.** Die drei internen Kommunikationskontroller **193** einer Komponente sind in der Lage, *interne Synchronisationsnachrichten* **191** in beiden Richtungen (bi-direktional) zu transportieren.

Weiters verfügen in dem gezeigten Beispiel die zweite und die vierte Komponente **120, 140** jeweils über einen sogenannten "externen" Kommunikationskontroller **194.** Diese zwei externen Kommunikationskontroller **194** können die *externen Synchronisationsnachrichten* **192** vorzugsweise nur in einer Richtung (uni-direktional) transportieren -in der Richtung vom Zeitserver zu den *externen Empfängern* des verteilten Echtzeitcomputersystems.

Über die *internen Kommunikationskanäle* **190** zwischen den Komponenten **110** und **120,** sowie den Komponenten **130** und **140** können sowohl die *internen Synchronisationsnachrichten **191*** wie auch die *externe Synchronisationsnachrichten **192*** übertragen werden.

Ein *externer Kommunikationskontroller* **194** kann die *externen Synchronisationsnachrichten* **192** auch über einen drahtlosen Funkkanal an seine externen Empfänger senden. Jedoch muss gewährleistet sein, dass die beiden Kommunikationskontroller **194** die beiden externen Synchronisationsnachrichten **192** *gleichzeitig,* z.B. auf unterschiedlichen Frequenzbändern, übertragen.

Jede der vier Komponenten **110**, **120**, **130**, **140** der **Figur 1** verfügt über einen *internen Computer* mit einem *Oszillator* und einem *lokalen Tick-Zähler,* sowie einer Software, die einen Uhrensynchronisationsalgorithmus ausführt. Nach dem Einschalten einer Komponente, dem *Power-up,* wird eine Initialisierungsroutine angestoßen, die den lokalen Tick-Zähler jeder Komponente mit dem Wert Null initialisiert. Der Wert des lokalen Tick-Zählers wird pro Periode des Oszillators um 1 erhöht.

Nach dem *Power-up* beginnt die *Start-up* Phase des Zeitservers. Während der Start-up Phase übernimmt eine ausgezeichnete Komponente, z.B. die Komponente **110**, die Rolle eines zentralen *Time-Masters.* Der *Time Master* sendet eine *interne Start-up Nachricht* **191** mit dem Inhalt ihres lokalen *Tick-Zählers* zum Zeitpunkt des Sendens *gleichzeitig* über ihre drei internen Kommunikationskontroller **193** an die anderen drei Komponenten **120**, **130**, **140.** Jeder (komponenten-interne) Empfänger **120**, **130**, **140** der Startup Nachricht korrigiert den in der Startup Nachricht enthaltenen Tick-Zähler um eine *a priori* bekannte Transportverzögerung der Start-up Nachricht und schreibt diesen korrigierten Wert in seinen Tick-Zähler. Zu diesem Zeitpunkt sind nun die lokalen Tick-Zähler aller Uhren synchronisiert. Der Zeitpunkt des Eintreffens einer einlaufenden Nachricht in einer Komponente kann durch den Einsatz von unterstützenden Hardwaremechanismen genau festgehalten werden.

Im Rahmen eines Systementwurfs- *a priori* - werden periodische *interne Synchronisationszeitpunkte* festgelegt, zu denen die lokalen Tick-Zähler der Komponenten korrigiert werden, um die im Zeitintervall zwischen zwei internen Synchronisationszeitpunkten aufgetretenen Abweichungen ihrer Uhren zu korrigieren.

Jede der vier Komponenten sendet zu jedem *internen Synchronisationszeitpunkt* eine *interne Synchronisationsnachricht* **191** gleichzeitig über ihre drei internen Kommunikationskontroller **193** an alle anderen Komponenten des Zeitservers. Eine *interne Synchronisationsnachricht* **191** enthält den Stand des lokalen Tick-Zählers des jeweiligen Senders zum Zeitpunkt des Sendens in der Payload.

Jeder Empfänger einer *internen Synchronisationsnachricht* **191** hält den Stand seines lokalen Tick-Zählers zum Empfangszeitpunkt der *internen Synchronisationsnachricht* **191** fest (vorzugsweise durch Hardwaremechanismen im Kommunikationskontroller **193**).

Entsprechend **Figur 1** enthält jede Komponente drei interne Synchronisationsnachrichten **191** über die drei internen Kommunikationskontroller **193.** Z.B. empfängt die erste Komponente **110** je eine interne Synchronisationsnachricht von jeder der Komponenten **120**, **130**, **140.**

Jede Komponente ermittelt die Zeitdifferenzen zwischen den in den *internen Synchronisationsnachrichten* enthaltenen Sendezeitpunkten und den festgehaltenen Empfangszeitpunkten, korrigiert um die *a priori* bekannte Verzögerungen der *internen Synchronisationsnachrichten,* und übergibt diese Zeitdifferenzen einem fehlertoleranten Uhrensynchronisations-Algorithmus. In **Figur 1** stehen somit dem Uhrensynchronisations-Algorithmus in der ersten Komponente **110** vier Zeitdifferenzen zur Verfügung, drei von den Nachrichten der Komponente **120**, **130** und **140,** sowie die Zeitdifferenz Null vom Tick-Zähler der Komponente **110.** (Die Komponente **110** nimmt dabei an, dass sie *richtig* liegt.)

Fehlertolerante Uhrensynchronisations-Algorithmen sind in der Fachliteratur ausführlich beschrieben [z.B. Kop11, S. 69]. Ein fehlertoleranter Uhrensynchronisations-Algorithmus wird in *jeder Komponente* ausgeführt und ermittelt aus der Gesamtheit der ermittelten Zeitdifferenzen aller Uhren einen Korrekturwert für die eigene Uhr. Der Tick-Zähler der eigenen Uhr wird mit diesem Korrekturwert korrigiert. Der Begriff der *Präzision* eines Ensembles beschreibt die Genauigkeit der internen Synchronisation [Kop11, S. 55].

Im Rahmen des Systementwurfs werden periodische *externe Synchronisationszeitpunkte,* und entsprechende *Empfangszeitpunkte* einer *externen Synchronisationsnachricht* **192** bei einem externen Empfänger festgelegt. Eine externe Synchronisationsnachricht **192** enthält in ihrer Payload den geplanten Empfangszeitpunkt dieser Nachricht bei dem externen Empfänger und vorzugsweise eine *elektronische Unterschrift (Signatur) des Senders,* d.h. des Erstellers der externen Synchronisationsnachrichten **192** (im vorliegenden Fall sind das die Komponenten **110**, **130**). Es wird angenommen, dass eine *elektronische Unterschrift des Senders* nicht gefälscht werden kann.

Eine externe Synchronisationsnachricht **192** kann in ihrer Payload auch Angaben über den inneren Zustand einer Komponente enthalten.

Die periodischen *Synchronisationszeitpunkte* der *externen Synchronisationsnachrichten* sollen vorzugsweise so gewählt werden, dass der zeitliche Abstand zwischen zwei Synchronisationsnachrichten einer (negativen) Potenz der *SI Sekunde* entspricht. Diese zeitliche Differenz kann von der GPS Zeit, die als Basis der Zeitzählung die SI Sekunde verwendet, abgeleitet werden. Wenn die *externen Synchronisationsnachrichten* mit der GPS Zeit synchronisiert sind, so ist die Zeitbasis des verteilten Computersystems weltweit mit allen anderen Computern, die auf der GPS Zeit aufbauen, synchronisiert

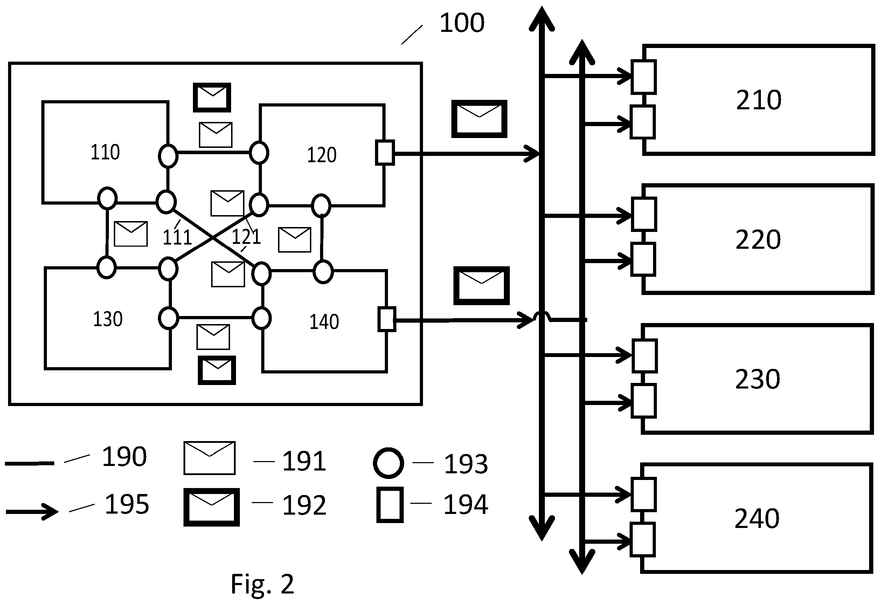

**Figur 2** zeigt ein Echtzeitcomputersystems mit vier Computern **210**, **220**, **230**, **240,** die mit einem fehlertoleranten Zeitserver gemäß **Figur 1** verbunden sind. Die erste Komponente **110** des Zeitservers **100** gemäß **Figur 1** sendet eine für die Computer **210**, **220**, **230**, **240** bestimmte *externe Synchronisationsnachricht* **192** über ihre internen Kommunikationskontroller **193** an den internen Kommunikationskontroller **193** der zweiten Komponente **120.** Die zweite Komponente **120** überprüft die Richtigkeit des in der *externen Synchronisationsnachricht* enthaltenen externen Empfangszeitpunkts. Dieser externe Empfangszeitpunkt ist gültig, wenn der Stand der Uhr der Komponente **120** zum Zeitpunkt des Empfangs der *externen Synchronisationsnachricht* innerhalb eines a *priori festgelegten Intervalls vor dem* externen Empfangszeitpunkt, welcher in der *externen Synchronisationsnachricht* enthaltenen ist, liegt. Ist die *externe Synchronisationsnachricht* nicht gültig, so wird sie verworfen. Anderenfalls wird die *externe Synchronisationsnachricht* von der zweiten Komponente **120** über ihren unidirektionalen externen Kommunikationskontroller **194** zu den Computern **210**, **220**, **230, 240** zu einem Zeitpunkt gesendet, der sicher stellt, dass die Nachricht zu dem in der *externen Synchronisationsnachricht* enthaltenen Empfangszeitpunkt bei den Computern **210**, **220**, **230**, **240** eintrifft. Die zweite Komponente **120** kann den in der *externen Synchronisationsnachricht* enthaltenen externen Empfangszeitpunkt nicht ändern, da beispielsweise diese *externe Synchronisationsnachricht* von der ersten Komponente **110** signiert ist.

Die vierte Komponente **140** führt das oben beschriebene Verfahren *gleichzeitig* in Bezug auf die zweite *externe Synchronisationsnachricht* **192** durch und sendet diese zu den Computern **210**, **220**, **230**, **240** des Echtzeitcomputersystems.

Dabei erhält die vierte Komponente **140** intern die externe Synchronisationsnachricht **192** von der dritten Komponente **130.**

Allgemein gilt vorzugsweise, dass jeweils zwei Komponenten (hier die zweite und die vierte Komponente) gleichzeitig eine externe Synchronisationsnachricht nach Außen senden. Jede dieser beiden Komponenten erhält dabei intern die externe Synchronisationsnachricht von einer anderen - und jeweils nur von dieser - Komponente, z.B. erhält die zweite Komponente diese von der ersten Komponente (und nur von dieser) und die vierte Komponente diese von der dritten Komponente (und nur von dieser). Vorzugsweise signiert jene Komponente, welche die externe Synchronisationsnachricht erzeugt und intern an die ihr zugeordnete Komponente versendet, diese externe Synchronisationsnachricht.

In der in **Figur 1** gezeigten Struktur wäre es auch denkbar, dass intern die erste Komponente die externe Synchronisationsnachricht (nur) an die vierte Komponente und die dritte Komponente die externe Synchronisationsnachricht (nur) an die zweite Komponente sendet.

Es ist für den Fachmann klar, dass auch vorgesehen sein könnte, dass natürlich auch andere Komponenten (z.B. erste und zweite Komponente) die externen Synchronisationsnachrichten paarweise nach Extern senden, und sie intern die externen Synchronisationsnachrichten von den beiden anderen Komponenten, z.B. von der dritten Komponente und von der vierten Komponente, erhalten.

**Figur 2** zeigt vier externe Empfänger **210**, **220**, **230**, **240** des verteilten Echtzeitcomputersystems, deren Uhren von dem fehlertoleranten Zeitserver **100** mit der globalen Zeit versorgt werden. Jeder dieser vier externen Empfänger erhält innerhalb der *Präzision* um den in der *externen Synchronisationsnachricht* enthaltenen Empfangszeitpunkt zwei *externe* Synchronisationsnachrichten über die zwei unabhängigen externen Kommunikationskontroller **194** von den entsprechenden Komponenten **120**, **140** des Zeitservers **100.**

Eine bei einem externen Empfänger eintreffende *externen Synchronisationsnachricht* ist *gültig,* wenn der Inhalt der Nachricht mit einer in der Nachricht enthaltenen Signatur übereinstimmt.

Die Differenz zwischen dem von dem externen Empfänger festgehaltenen Zeitpunkt des Eintreffens der ersten *gültigen externen Synchronisationsnachricht* **192** und dem in der *ersten gültigen externen Synchronisationsnachricht* **192** *enthaltenen* Empfangszeitpunkt wird verwendet, um den Stand der Uhr des externen Empfängers auf die empfangene globale Zeit zu stellen. Die später eintreffende zweite *externen Synchronisationsnachricht* **192** wird vom externen Empfänger verworfen, da sie möglicherweise von einem fehlerhaften Sender (z.B. von einer fehlerhaften Komponente **120**) unzulässig verzögert wurde.

Die Fehlerhypothese eines fehlertoleranten Systems gibt an, welche Art von Fehlern von dem System toleriert werden [Kop11, S. 145]. Im vorliegenden Fall wird angenommen, dass jede Komponente des Zeitservers eine *unabhängige Fault-Containment Unit* (FCU) bildet und jede FCU *beliebig* ausfallen kann, d.h. die Fehlerart einer FCU ist nicht eingeschränkt. Weiters wird in der Fehlerhypothese angenommen, dass während des Betriebs nur eine Komponente des Zeitservers fehlerhaft ist.

Wenn eine der vier Komponenten des Zeitservers **110** fehlerhaft wird, so wird dieser Fehler durch die vorgeschlagene Systemarchitektur des Zeitservers maskiert. Wenn z.B. die Komponente **110** der **Figur** 1 fehlerhaft ist und zu einem falschen Zeitpunkt eine externe Synchronisationsnachricht **192**, die für die externen Empfänger **210**, **220**, **230**, **240** bestimmt ist, an die Komponente **120** sendet, so wird die Komponente **120** die Nachricht als fehlerhaft erkennen und verwerfen. Die zweite externe Synchronisationsnachricht **192,** die für die externen Empfänger **210**, **220**, **230**, **240** bestimmt ist, stammt von der dritten Komponente **130** und wird von der vierten Komponente **140** überprüft. Nachdem entsprechend der Fehlerhypothese nur eine Komponente -in diesem Fall die Komponente **110** -fehlerhaft sein kann, wird die zweite Synchronisationsnachricht korrekt bei den externen Empfängern **210**, **220**, **230**, **240** ankommen.

Wenn die überprüfende Komponente eine externe Synchronisationsnachricht **192** aufgrund eines Fehlers verzögert, so wird diese externe Synchronisationsnachricht zeitlich nach der anderen gültigen externen Synchronisationsnachricht **192** beim externen Empfänger ankommen und vom externen Empfänger verworfen. Wenn eine überprüfende Komponente den Inhalt einer externen Synchronisationsnachricht **192** ändert, so wird die externe Synchronisationsnachricht **192** *ungültig* und vom externen Empfänger verworfen.

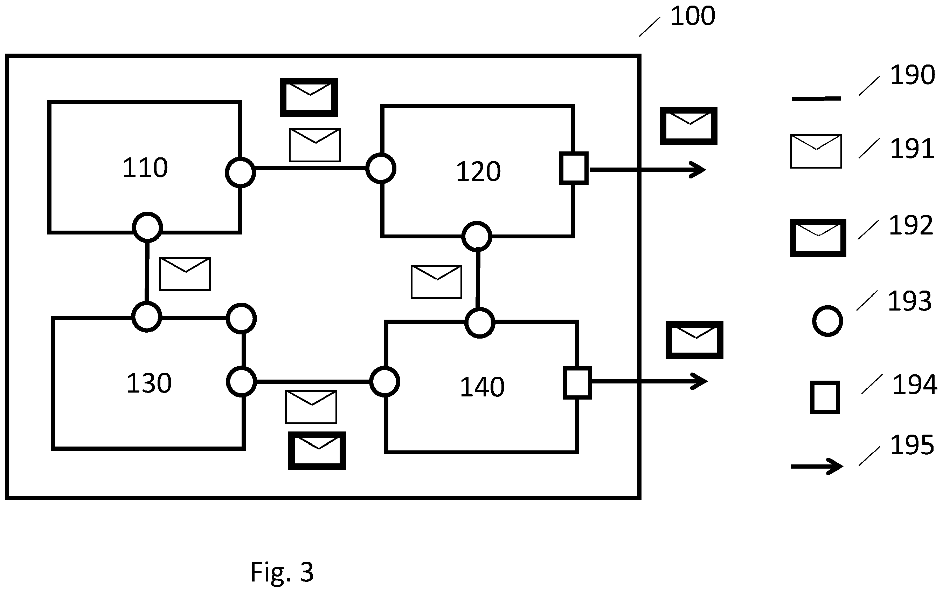

**Figur** 3 zeigt einen Zeitserver **100,** bei dem der Kommunikationskanal 111 zwischen der ersten und der vierten Komponenten **110**, **140** der **Figur** 1 und der Kommunikationskanal 121 zwischen der zweiten und der dritten Komponente **120**, **130** der **Figur** 1 fehlen. Durch das Weglassen dieser beiden Kommunikationskanäle können vier interne Kommunikationskontroller 193 und zwei Signalleitungen eingespart werden. Der Preis, der diesen Einsparungen gegenübersteht, ist die Einführung einer zweistufigen Übertragung der *internen Synchronisationsnachrichten.* Zum Beispiel muss eine *interne Synchronisationsnachricht* von der ersten Komponente **110** an die vierte Komponente **140** in der ersten Stufe von der Komponente **110** an die Komponente **120** und in der zweiten Stufe von der Komponente **120** an die Komponente **140** gesendet werden. Die durch dieses zweistufige Übertragungsverfahren hervorgerufene zusätzliche zeitliche Verzögerung muss in der empfangenden Komponente **140** korrigiert werden.

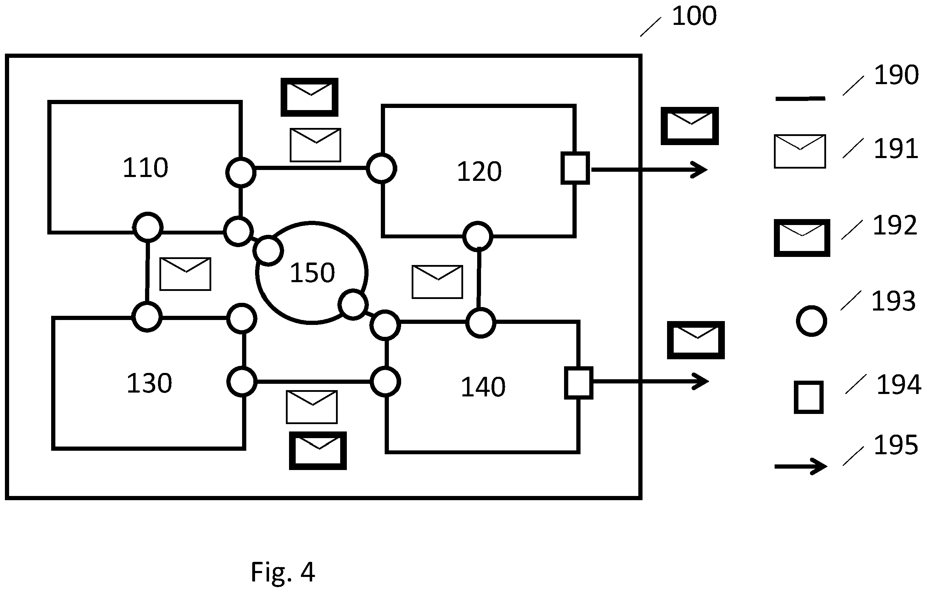

**Figur 4** zeigt einen Zeitserver **100** mit einem GPS Empfänger **150** zur Synchronisation der globalen Zeit mit der GPS Zeit. Das GPS Signal des Global Positioning Systems enthält ein weltweit synchronisiertes Zeitsignal mit einer Präzision von besser als 100 nsec. Mit diesem Signal kann die globale Zeit der externen Empfänger weltweit synchronisiert werden.

Es ist vorteilhaft, wenn die Komponenten des Zeitservers, die das Zeitsignal vom GPS Empfänger **150** übernehmen, dieses Zeitsignal auf Plausibilität überprüfen. Z.B. kann die Dynamik der Feldstärke der eintreffenden GPS Signale überwacht werden, oder es kann eine sprunghafte Änderung der angebotenen Zeit festgestellt werden, um eine Intrusion zu erkennen.

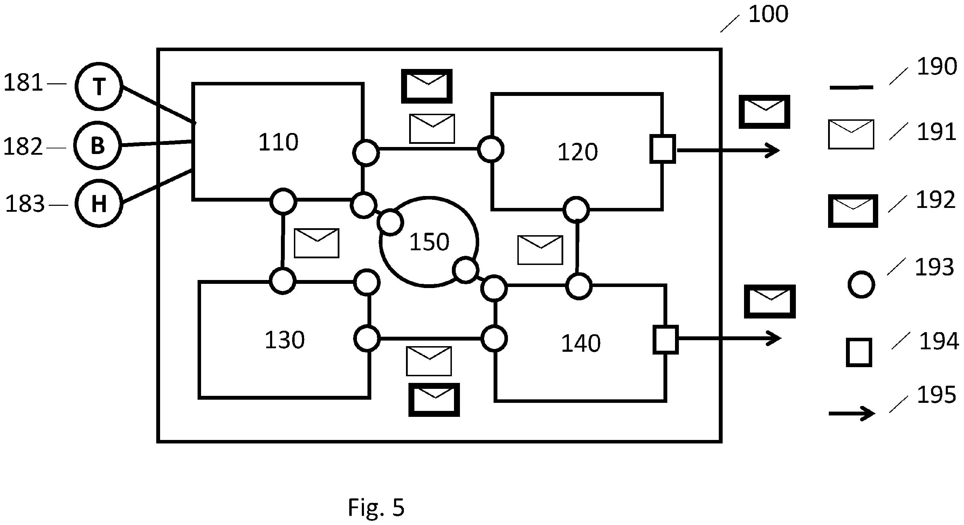

Der Zeitserver kann auch über Sensoren zur Messung der Umgebungsparameter verfügen, um die durch diese Umgebungsparameter verursachte Driftrate der Oszillatoren zu kompensieren. Beispiele für solche Umgebungsparameter sind Temperatur T, barometrischer Druck B, und Luftfeuchtigkeit H, die mit entsprechenden Sensoren **181**, **182, 183** erfasst werden können, wie dies beispielhaft in **Figur 5** (ausgehend von einem Zeitserver 100 wie in **Figur 4** gezeigt) dargestellt ist.

Es versteht sich von selbst, dass die Implementierung solcher Sensoren auch bei Zeitservern wie in **Figur 1** **oder** **3** dargestellt vorgesehen sein kann.

Ebenso kann alternativ oder zusätzlich ein GPS Empfänger genauso bei einem Zeitserver wie in **Figur 1** **oder** **3** gezeigt implementiert sein.

Es kann vorgesehen sein, dass eine externe Synchronisationsnachricht **192** ein weiteres Datenfeld enthält, in dem Daten über den internen Zustand des Zeitservers **100** veröffentlicht werden, um einem externen Monitorsystem die Möglichkeit zu geben, anhand der externe Synchronisationsnachrichten **192** die interne Funktion des Zeitservers zu überprüfen. Diese Daten können neben anderen die gemessenen Zeitdifferenzen, den errechnete Korrekturwert der globalen Zeit oder die Feldstärke des GPS Empfängers betreffen.

Allgemein, d.h. auch für alle Ausführungsformen der Erfindung, gilt mit Vorteil, dass der Zeitserver jeweils aus zwei Subsystemen aufgebaut ist, wobei jedes Subsystem jeweils eine Komponente **110**, **130,** welche externe Synchronisationsnachrichten erzeugt (und vorzugsweise signiert), sowie jeweils eine weitere Komponente **120**, **140,** welche diese externe Synchronisationsnachricht, die von der anderen Komponente ihres Subsystems generiert wird, empfängt umfasst, wobei letztere Komponente jedes Subsystems die externe Synchronisationsnachricht an eine externen Empfänger sendet. Diese Systemstruktur hat den Vorteil, dass die Subsysteme an unterschiedlichen Orten angeordnet werden können. Der Ausfall eines Subsystems kann toleriert werden.

Vorzugsweise verfügt jedes Subsystem über einen eigenen GPS Empfänger und/oder über eine eigene Stromversorgung.

### Zitierte Literatur:

[Dan97] Dana, P.H. Global Positioning System (GPS) Time Dissemination for Real-Time Applications. Real-Time Systems. Vol 12. No. 1., pp. 9-40. 1997.
[Kop11] Kopetz, H. Real-Time Systems, Design Principles for Distributed Embedded Applications. Springer Verlag. 2011.
[Tay01] Taylor, B. Ed. The International System of Units. NIST Special Publication 130. 2001 Edition. National Institute of Standards and Technology (NIST). US Department of Commerce. 2001.

## Patentansprüche

1. Verfahren zur Bereitstellung einer fehlertoleranten globalen Zeit durch einen Zeitserver (**100**) in einem verteilten Echtzeitcomputersystem, wobei
der Zeitserver (**100**) vier *Komponenten* (**110**, **120**, **130**, **140**) umfasst, eine erste Komponente (110), eine zweite Komponente (**120**), eine dritte Komponente (**130**), und eine vierte Komponente (**140**),
wobei zur Übertragung von Nachrichten die erste Komponente (**110**) mit der zweiten und der dritten Komponente (**120**, **130**) jeweils über einen bi-direktionalen Kommunikationskanal (**190**) verbunden ist, und die vierte Komponente (**140**) mit der zweiten und der dritten Komponente (**120**, **130**) jeweils über einen bi-direktionalen Kommunikationskanal (**190**) verbunden ist,
und wobei jede der vier Komponenten (**110**, **120**, **130**, **140**) einen Oszillator und einen lokalen Tick-Zähler umfasst,
**dadurch gekennzeichnet, dass**
nach einem Power-up der lokale Tick-Zähler jeder Komponente (**110**, **120**, **130**, **140**) mit einem identischen Wert initialisiert wird,
wobei der Wert des lokalen Tick-Zählers einer Komponente in jeder Periode des Oszillators der Komponente um einen festen Wert erhöht wird,
wobei in einer Start-up Phase *nach Power-up* des Zeitservers (**100**) eine der vier Komponenten eine *Start-up Nachricht* mit einem aktuellen Stand ihres lokalen Tick-Zählers zum Zeitpunkt des Sendens der *Start-up Nachricht* an die anderen Komponenten (**120**, **130**, **140**) sendet,
und wobei jeder Empfänger (**110**, **120**, **130**) der Start-up Nachricht seinen lokalen Tick-Zähler auf den in der Start-up Nachricht enthaltenen Wert, korrigiert um eine *a priori* bekannte Transportverzögerung der Start-up Nachricht, setzt,
und wobei zu *a priori* festgelegten periodischen, *internen Synchronisationszeitpunkten* jede der vier Komponenten (**110**, **120**, **130**, **140**) eine *interne Synchronisationsnachricht,* die den Stand ihres lokalen Tick-Zählers zum Zeitpunkt des Sendens der *internen Synchronisationsnachricht* enthält, gleichzeitig an die anderen drei Komponenten sendet,
und wobei jeder Empfänger einer *internen Synchronisationsnachricht* den Stand seines lokalen Tick-Zählers zum Empfangszeitpunkt der *internen Synchronisationsnachricht* festhält, und die Zeit-Differenz zwischen dem in der *internen Synchronisationsnachricht* enthaltenen Sendezeitpunkt und dem festgehaltenen Empfangszeitpunkt der *internen Synchronisationsnachricht,* korrigiert um die *a priori* bekannte Verzögerung der *internen Synchronisationsnachricht,* ermittelt,
und wobei jeder interne Computer einer Komponente aus diesen Zeitdifferenzen entsprechend einem fehlertoleranten Uhrensynchronisations-Algorithmus einen Korrekturterm für den in seiner Komponente enthaltenen Tick-Zähler ermittelt und den Stand des lokalen Tick-Zählers um diesen Korrekturterm korrigiert,
und wobei zwei der vier Komponenten je eine *externe Synchronisationsnachricht* (**192**), die einen *a priori* festgelegten *externen Empfangszeitpunkt* dieser *externen Synchronisationsnachricht* enthält, bilden, wobei beide externen Synchronisationsnachrichten denselben externen Empfangszeitpunkt enthalten, und diese *externen* Synchronisationsnachrichten gleichzeitig zu *a priori* festgelegten periodischen *externen Synchronisationszeitpunkten* jeweils über einen Kommunikationskanal (190) direkt an eine der anderen Komponenten (**120**, **130**), aber nicht an dieselbe der beiden anderen Komponenten, senden,
und wobei jede der Komponenten (**120**, **140**) des Zeitservers (**100**), an welche eine externe Synchronisationsnachricht gesendet wurde, überprüft, ob der in der empfangenen *externen Synchronisationsnachricht* enthaltene *externe Empfangszeitpunkt* gemessen zum Stand ihres lokalen Tick-Zählers zum Zeitpunkt des Empfangs der externen Synchronisationsnachricht so gesetzt ist, wie es durch eine a *priori Planung* des externen Synchronisationszeitpunktes und des externen Empfangszeitpunktes vorgeben ist,
- und falls dies nicht der Fall ist, die *externe Synchronisationsnachricht* verwirft,
- und falls dies der Fall ist, die externe Synchronisationsnachricht über einen externen Kommunikationskontroller (**194**) der Komponente (**120**, **140**) an einen externen Empfänger zu einem Zeitpunkt, der sicher stellt, dass die *externe Synchronisationsnachricht* zu dem in der *externen Synchronisationsnachricht* enthaltenen *externen Empfangszeitpunkt* beim externen Empfänger eintrifft, weiterleitet,
und wobei jeder externe Empfänger den Zeitpunkt des Empfangs der ersten eintreffenden *externen Synchronisationsnachricht* mit seiner lokalen Uhr festhält und anschließend den Stand seiner lokalen Uhr um die Differenz zwischen dem festgehaltenen Zeitpunkt des Empfangs der *externen Synchronisationsnachricht* und dem in der *externen Synchronisationsnachricht* enthaltenen externen Empfangszeitpunkt korrigiert.

2. Verfahren nach Anspruch 1, wobei Komponenten (**110**, **130**), welche eine *externe Synchronisationsnachricht erzeugen,* diese externe Synchronisationsnachricht mit einer elektronischen Unterschrift versehen und der Empfänger dieser externen Synchronisationsnachricht auf Basis dieser elektronischen Unterschrift überprüft, ob die Nachricht gültig ist und die Nachricht verwirft, wenn sie ungültig ist.

3. Verfahren nach Anspruch 1 oder 2, wobei die erste Komponente (**110**) mit der vierten Komponente (**140**) über einen bi-direktionalen Kommunikationskanal (**111**) und/oder die zweite Komponente (**120**) mit der dritten Komponenten (**130**) über einen bi-direktionalen Kommunikationskanal (**121**) verbunden ist/sind.

4. Verfahren nach einem der Ansprüche 1 bis 3, wobei der Zeitserver (**100**) einen GPS-Empfänger (**150**) umfasst, und eine über den GPS-Empfänger (**150**) empfangene externe GPS-Zeit periodisch an eine oder mehrere der Komponenten (**110**, **120**, **130**, **140**) des Zeitservers weitergeleitet wird.

5. Verfahren nach Anspruch 4, wobei von dem Zeitserver (**100**), z.B. von einer Komponente des Zeitservers (100), die mit dem GPS-Empfänger (**150**) verbunden ist, die Feldstärke eines auf den GPS-Empfänger einfallenden Signals, mit welchem die externe GPS-Zeit an den GPS-Empfänger (150) übertragen wird, überprüft, oder die angebotene Zeit auf sprunghafte Änderungen untersucht wird.

6. Verfahren nach einem der Ansprüche 1 bis 5, wobei der zeitliche Abstand zwischen zwei externen Synchronisationsnachrichten einer Potenz der SI-Sekunde entspricht.

7. Verfahren nach einem der Ansprüche 1 bis 6, wobei externe Synchronisationsnachrichten (**192**) jeweils ein Datenfeld umfassen, in dem Daten über den internen Zustand des Zeitservers (**100**) enthalten sind.

8. Zeitserver (**100**) zur Bereitstellung einer fehlertoleranten globalen Zeit für ein verteiltes Echtzeitcomputersystem, wobei
der Zeitserver (**100**) vier *Komponenten* (**110**, **120**, **130**, **140**) umfasst, eine erste Komponente (**110**), eine zweite Komponente (**120**), eine dritte Komponente (**130**), und eine vierte Komponente (**140**),
wobei zur Übertragung von Nachrichten die erste Komponente (**110**) mit der zweiten und der dritten Komponente (**120**, **130**) jeweils über einen bi-direktionalen Kommunikationskanal (**190**) verbunden ist, und die vierte Komponente (**140**) mit der zweiten und der dritten Komponente (**120**, **130**) jeweils über einen bi-direktionalen Kommunikationskanal (**190**) verbunden ist,
und wobei jede der vier Komponenten (**110**, **120**, **130**, **140**) einen Oszillator und einen lokalen Tick-Zähler umfasst,
wobei nach einem Power-up der lokale Tick-Zähler jeder Komponente (**110**, **120**, **130**, **140**) mit einem identischen Wert initialisiert wird, wobei der Wert des lokalen Tick-Zählers einer Komponente in jeder Periode des Oszillators der Komponente um einen festen Wert erhöht wird,
wobei in einer Start-up Phase *nach Power-up* des Zeitservers (**100**) eine der vier Komponenten dazu eingerichtet ist, eine *Start-up Nachricht* mit einem aktuellen Stand ihres lokalen Tick-Zählers zum Zeitpunkt des Sendens der *Start-up Nachricht* an die anderen Komponenten (**120**, **130**, **140**) zu senden,
und wobei jeder Empfänger (**110**, **120**, **130**) der Start-up Nachricht dazu eingerichtet ist, seinen lokalen Tick-Zähler auf den in der Start-up Nachricht enthaltenen Wert, korrigiert um eine *a priori* bekannte Transportverzögerung der Start-up Nachricht, zu setzen,
und wobei jede Komponente (**110**, **120**, **130**, **140**) dazu eingerichtet, zu *a priori* festgelegten periodischen, *internen Synchronisationszeitpunkten* eine *interne Synchronisationsnachricht,* die den Stand ihres lokalen Tick-Zählers zum Zeitpunkt des Sendens der *internen Synchronisationsnachricht* enthält, gleichzeitig an die anderen drei Komponenten zu senden,
und wobei jeder Empfänger einer *internen Synchronisationsnachricht* dazu eingerichtet ist, den Stand seines lokalen Tick-Zählers zum Empfangszeitpunkt der *internen Synchronisationsnachricht* festzuhalten, und die Zeit-Differenz zwischen dem in der *internen Synchronisationsnachricht* enthaltenen Sendezeitpunkt und dem festgehaltenen Empfangszeitpunkt der *internen Synchronisationsnachricht,* korrigiert um die *a priori* bekannte Verzögerung der *internen Synchronisationsnachricht,* zu ermitteln,
und wobei jeder interne Computer einer Komponente dazu eingerichtet ist, aus diesen Zeitdifferenzen entsprechend einem fehlertoleranten Uhrensynchronisations-Algorithmus einen Korrekturterm für den in seiner Komponente enthaltenen Tick-Zähler zu ermitteln und den Stand des lokalen Tick-Zählers um diesen Korrekturterm zu korrigieren,
und wobei zwei der vier Komponenten, z.B. die erste Komponente (**110**) und die dritte Komponente (**130**), dazu eingerichtet sind, je eine *externe Synchronisationsnachricht* (**192**), die einen *a priori* festgelegten *externen Empfangszeitpunkt* dieser *externen Synchronisationsnachricht* enthält, zu bilden, wobei beide externen Synchronisationsnachrichten denselben externen Empfangszeitpunkt enthalten, und diese *externen* Synchronisationsnachrichten gleichzeitig zu *a priori* festgelegten periodischen *externen Synchronisationszeitpunkten* jeweils über einen Kommunikationskanal (190) direkt an eine der anderen Komponenten (**120**, **130**), aber nicht an dieselbe der beiden anderen Komponenten, zu senden,
und wobei jede der Komponenten (**120**, **140**) des Zeitservers (**100**), an welche eine externe Synchronisationsnachricht gesendet wurde, dazu eingerichtet ist zu überprüfen, ob der in der empfangenen *externen Synchronisationsnachricht* enthaltene *externe Empfangszeitpunkt* gemessen zum Stand ihres lokalen Tick-Zählers zum Zeitpunkt des Empfangs der externen Synchronisationsnachricht so gesetzt ist, wie es durch eine a *priori Planung* des externen Synchronisationszeitpunktes und des externen Empfangszeitpunktes vorgeben ist,
- und falls dies nicht der Fall ist, dazu eingerichtet ist, die *externe Synchronisationsnachricht* zu verwerfen,
- und falls dies der Fall ist, dazu eingerichtet ist, die externe Synchronisationsnachricht über einen externen Kommunikationskontroller (**194**) der Komponente (**120**, **140**) an einen externen Empfänger zu einem festgelegten Zeitpunkt, der sicher stellt, dass die *externe Synchronisationsnachricht* zu dem in der *externen Synchronisationsnachricht* enthaltenen *externen Empfangszeitpunkt* beim externen Empfänger eintrifft, weiterzuleiten.

9. Zeitserver nach Anspruch 8, wobei der Zeitserver in zwei physikalisch getrennte Subsysteme unterteilt ist, wobei jedes Subsysteme eine Komponente (**110**, **130**) umfasst, welche externe Synchronisationsnachrichten erzeugt und diese vorzugsweise signiert, sowie jeweils eine weitere Komponente (**120**, **140**) umfasst, welche diese externe Synchronisationsnachricht, die von der anderen Komponente ihres Sub-Systems generiert wird, empfängt, und wobei letztere Komponente (**120**, **140**) jedes Sub-Systems dazu eingerichtet ist, die externe Synchronisationsnachricht an eine externen Empfänger zu senden.

10. Zeitserver nach Anspruch 8 oder 9, wobei die beiden Subsysteme im physikalischen Raum derart voneinander getrennt, beispielsweise so weit voneinander entfernt angeordnet, sind, dass eine physikalische Fehlerursache nur eines der beiden Subsysteme treffen kann.

11. Zeitserver nach einem Anspruch 10, wobei die beiden Subsysteme über je eine unabhängige Stromversorgung verfügen.

12. Zeitserver nach Anspruch 10 oder 11, wobei in jedem der getrennten Subsysteme ein GPS Empfänger enthalten oder jedem Subsystem ein eigener GPS Empfänger zugeordnet ist.

13. Zeitserver nach einem der Ansprüche 8 bis 12, wobei die externen Kommunikationskontroller (**194**) Nachrichten dazu eingerichtet sind, nur unidirektional in der Richtung vom Zeitserver zu den externen Empfängern des Echtzeitsystems zu übertragen.

14. Zeitserver nach einem der Ansprüche 8 bis 13, wobei Komponenten (**110**, **130**), welche eine *externe Synchronisationsnachricht erzeugen,* dazu eingerichtet sind, diese externe Synchronisationsnachricht mit einer elektronischen Unterschrift versehen, sodass ein Empfänger dieser externen Synchronisationsnachricht auf Basis dieser elektronischen Unterschrift überprüfen kann, ob die Nachricht gültig ist und die Nachricht verwerfen kann, wenn sie ungültig ist.

15. Zeitserver nach einem der Ansprüche 8 bis 14, wobei die erste Komponente (**110**) mit der vierten Komponente (**140**) über einen bi-direktionalen Kommunikationskanal (**111**) und/oder die zweite Komponente (**120**) mit der dritten Komponenten (**130**) über einen bi-direktionalen Kommunikationskanal (**121**) verbunden ist/sind.

16. Echtzeitcomputersystem umfassend einen Zeitserver (**100**) nach einem der Ansprüche 8 bis 15 sowie externe Empfänger (**210**, **220**, **230**, **240**), welche von dem Zeitserver (**100**) mit der globalen Zeit versorgt werden, indem jeder externe Empfänger den Zeitpunkt des Empfangs der ersten eintreffenden *externen Synchronisationsnachricht* mit seiner lokalen Uhr festhält und anschließend den Stand seiner lokalen Uhr um die Differenz zwischen dem festgehaltenen Zeitpunkt des Empfangs der *externen Synchronisationsnachricht* und dem in der *externen Synchronisationsnachricht* enthaltenen externen Empfangszeitpunkt korrigiert.

## Claims

1. Method for providing fault-tolerant global time using a time server (100) in a distributed real-time computer system, wherein
the time server (100) comprises four components (110, 120, 130, 140), a first component (110), a second component (120), a third component (130), and a fourth component (140), wherein, for transmitting messages, the first component (110) is connected to the second and third components (120, 130), respectively, via a bi-directional communication channel (190), and the fourth component (140) is connected to the second and third components (120, 130), respectively, via a bi-directional communication channel (190),
and wherein each of the four components (110, 120, 130, 140) comprises an oscillator and a local tick counter,
**characterized in that**
after a power-up the local tick counter of each component (110, 120, 130, 140) is initialized with an identical value,
wherein the value of the local tick counter of a component is, in each period of the oscillator of the component, incremented by a fixed value,
wherein in a start-up phase upon power-up of the time server (100), one of the four components sends a start-up message with a current state of its local tick counter at the time of sending the start-up message to the other components (120, 130, 140),
and wherein each receiver (110, 120, 130) of the start-up message sets its local tick counter to the value included in the start-up message and corrected for a transport delay of the start-up message known *a priori,*
and wherein at *a priori* determined periodic internal synchronization times, each of the four components (110, 120, 130, 140) sends an internal synchronization message, which contains the state of its local tick counter at the time of sending the internal synchronization message, simultaneously to the other three components,
and wherein each receiver of an internal synchronization message records the state of its local tick counter at the time of receipt of the internal synchronization message, and determines the time difference between the time of transmission included in the internal synchronization message and the recorded time of receipt of the internal synchronization message, corrected for the *a priori* known delay of the internal synchronization message,
and wherein each internal computer of a component determines a correction term for the tick counter contained in its component from said time differences according to an error-tolerant clock synchronization algorithm and corrects the state of the local tick counter by said correction term, and wherein two of the four components each form an external synchronization message (192) containing an *a priori* determined external time of receipt of said external synchronization message, both external synchronization messages containing the same external time of receipt, and send said external synchronization messages simultaneously at *a priori* determined periodic external synchronization times directly to one of the other components (120, 130), but not to the same one of the other two components, via a respective communication channel (190),
and wherein each of the components (120, 140) of the time server (100) to which an external synchronization message has been sent checks whether the external time of receipt included in the received external synchronization message as measured for the state of its local tick counter at the time of receipt of the external synchronization message is set as predetermined by an *a priori* scheduling of the external synchronization timing and the external time of receipt,
- and if this is not the case, discards the external synchronization message,
- and if this is the case, forwards the external synchronization message via an external communication controller (194) of the component (120, 140) to an external receiver at a time that ensures that the external synchronization message arrives at the external receiver at the external time of receipt included in the external synchronization message,
and wherein each external receiver records the time of receipt of the first arriving external synchronization message with its local clock and subsequently corrects the state of its local clock by the difference between the recorded time of receipt of the external synchronization message and the external time of receipt included in the external synchronization message.

2. Method according to claim 1, wherein components (110, 130) generating an external synchronization message provide said external synchronization message with an electronic signature and the receiver of said external synchronization message checks, based on said electronic signature, whether the message is valid, and discards the message if it is invalid.

3. Method according to claim 1 or 2, wherein the first component (110) is connected to the fourth component (140) via a bi-directional communication channel (111) and/or the second component (120) is connected to the third component (130) via a bi-directional communication channel (121).

4. Method according to any one of claims 1 to 3, wherein the time server (100) comprises a GPS receiver (150), and an external GPS time received via the GPS receiver (150) is periodically forwarded to one or more of the components (110, 120, 130, 140) of the time server.

5. Method according to claim 4, wherein the time server (100), e.g. a component of the time server (100) connected to the GPS receiver (150), checks the field strength of a signal incident on the GPS receiver at which the external GPS time is sent to the GPS receiver (150), or checks the offered time for abrupt changes.

6. Method according to any one of claims 1 to 5, wherein the time interval between two external synchronization messages corresponds to a power of the SI second.

7. Method according to any one of claims 1 to 6, wherein external synchronization messages (192) each comprise a data field containing data about the internal state of the time server (100).

8. Time server (100) for providing fault-tolerant global time to a distributed real-time computer system, wherein
the time server (100) comprises four components (110, 120, 130, 140), a first component (110), a second component (120), a third component (130), and a fourth component (140), wherein, for transmitting messages, the first component (110) is connected to the second and third components (120, 130), respectively, via a bi-directional communication channel (190), and the fourth component (140) is connected to the second and third components (120, 130), respectively, via a bi-directional communication channel (190),
and wherein each of the four components (110, 120, 130, 140) comprises an oscillator and a local tick counter,
wherein after a power-up the local tick counter of each component (110, 120, 130, 140) is initialized with an identical value,
wherein the value of the local tick counter of a component is, in each period of the oscillator of the component, incremented by a fixed value,
wherein in a start-up phase after power-up of the time server (100), one of the four components is configured to send a start-up message with a current state of its local tick counter at the time of sending the start-up message to the other components (120, 130, 140),
and wherein each receiver (110, 120, 130) of the start-up message is configured to set its local tick counter to the value included in the start-up message corrected for a transport delay of the start-up message known *a priori,*
and wherein each component (110, 120, 130, 140) is configured to send, at *a priori* determined periodic internal synchronization times, an internal synchronization message, which contains the state of its local tick counter at the time of sending the internal synchronization message, simultaneously to the other three components,
and wherein each receiver of an internal synchronization message is configured to record the state of its local tick counter at the time of receipt of the internal synchronization message, and to determine the time difference between the time of transmission included in the internal synchronization message and the recorded time of receipt of the internal synchronization message, corrected for the *a priori* known delay of the internal synchronization message,
and wherein each internal computer of a component is configured to determine a correction term for the tick counter contained in its component from said time differences according to an error-tolerant clock synchronization algorithm and to correct the state of the local tick counter by said correction term,
and wherein two of the four components, e.g. the first component (110) and the third component (130), are configured to each form an external synchronization message (192) containing an *a priori* determined external time of receipt of this external synchronization message, both external synchronization messages containing the same external time of receipt, and to send said external synchronization messages simultaneously at *a priori* determined periodic external synchronization times directly to one of the other components (120, 130), but not to the same one of the other two components, via a respective communication channel (190),
and wherein each of the components (120, 140) of the time server (100) to which an external synchronization message has been sent is configured to check whether the external time of receipt included in the received external synchronization message as measured for the state of its local tick counter at the time of receipt of the external synchronization message is set as predetermined by an *a priori* scheduling of the external synchronization timing and the external time of receipt,
- and is, if this is not the case, configured to discard the external synchronization message,
- and is, if this is the case, configured to forward the external synchronization message via an external communication controller (194) of the component (120, 140) to an external receiver at a predetermined time that ensures that the external synchronization message arrives at the external receiver at the external time of receipt included in the external synchronization message.

9. Time server according to claim 8, wherein the time server is divided into two physically separated subsystems, each subsystem comprising a component (110, 130) which generates external synchronization messages, preferably signing them, and a further component (120, 140) which receives said external synchronization message generated by the respectively other component of its subsystem, and wherein the latter component (120, 140) of each subsystem is configured to send the external synchronization message to an external receiver.

10. Time server according to claim 8 or 9, wherein the two subsystems are separated from each other in physical space, for example arranged remote from each other, such that a physical cause of failure can affect only one of the two subsystems.

11. Time server according to any claim 10, wherein the two subsystems have independent power supplies respectively.

12. Time server according to claim 10 or 11, wherein each of the separate subsystems includes a respective GPS receiver or an respective individual GPS receiver is associated with each subsystem.

13. Time server according to any one of claims 8 to 12, wherein the external communication controllers (194) are configured to transmit messages only unidirectionally in the direction from the time server to the external receivers of the real-time system.

14. Time server according to any one of claims 8 to 13, wherein components (110, 130) generating an external synchronization message are configured to provide said external synchronization message with an electronic signature, enabling a receiver of said external synchronization message to verify whether the message is valid based on said electronic signature and to discard the message if it is invalid.

15. Time server according to any of claims 8 to 14, wherein the first component (110) is connected to the fourth component (140) via a bi-directional communication channel (111) and/or the second component (120) is connected to the third component (130) via a bi-directional communication channel (121).

16. Real-time computer system comprising a time server (100) according to any one of claims 8 to 15 and external receivers (210, 220, 230, 240) which are supplied with the global time by the time server (100) by each external receiver recording the time of receipt of the first incoming external synchronization message with its local clock and subsequently correcting the state of its local clock by the difference between the recorded time of receipt of the external synchronization message and the external time of receipt included in the external synchronization message.

## Revendications

1. Procédé pour fournir une temps globale tolérante aux pannes par un serveur de temps (100) dans un système informatique distribué en temps réel, dans lequel
le serveur de temps (100) comprend quatre composants (110, 120, 130, 140), un premier composant (110), un deuxième composant (120), un troisième composant (130), et un quatrième composant (140),
où pour la transmission de messages, le premier composant (110) est connecté aux deuxième et troisième composants (120, 130) par l'intermédiaire d'un canal de communication bidirectionnel (190) respectif, et le quatrième composant (140) est connecté aux deuxième et troisième composants (120, 130) par l'intermédiaire d'un canal de communication bidirectionnel (190) respectif,
et chacun des quatre composants (110, 120, 130, 140) comprend un oscillateur et un compteur local de ticks,
**caractérisé en ce que**
après une mise sous tension, le compteur local de ticks de chaque composant (110, 120, 130, 140) est initialisé avec une valeur identique,
la valeur du compteur local de ticks d'un composant étant augmentée d'une valeur fixe à chaque période de l'oscillateur du composant,
dans une phase de démarrage après la mise sous tension du serveur de temps (100), l'un des quatre composants envoyant un message de démarrage aux autres composants (120, 130, 140) avec un état actuel de son compteur local de ticks au moment de l'envoi du message de démarrage,
et chaque récepteur (110, 120, 130) du message de démarrage réglant son compteur local de ticks sur la valeur contenue dans le message de démarrage, corrigée d'un retard de transport connu *a priori* du message de démarrage,
et, à des moments de synchronisation interne périodiques définis *a priori*, chacun des quatre composants (110, 120, 130, 140) envoie simultanément aux trois autres composants un message de synchronisation interne contenant l'état de son compteur de ticks local au moment de l'envoi du message de synchronisation interne,
et chaque récepteur d'un message de synchronisation interne conservant l'état de son compteur de ticks local au moment de réception du message de synchronisation interne, et déterminant la différence de temps entre le moment d'émission contenu dans le message de synchronisation interne et le moment de réception conservé du message de synchronisation interne, corrigée du retard connu *a priori* du message de synchronisation interne,
et chaque ordinateur interne d'un composant déterminant à partir de ces différences de temps, conformément à un algorithme de synchronisation d'horloge tolérant aux erreurs, un terme de correction pour le compteur de ticks contenu dans son composant et corrigeant l'état du compteur de ticks local en fonction de ce terme de correction,
et deux des quatre composants formant chacun un message de synchronisation externe (192) qui contient un moment de réception externe fixé *a priori* de ce message de synchronisation externe, les deux messages de synchronisation externes contenant le même moment de réception externe, et ces messages de synchronisation externes étant envoyés simultanément à des moments de synchronisation externes périodiques fixés *a priori*, chacun par l'intermédiaire d'un canal de communication (190), directement à l'un des autres composants (120, 130), mais pas au même des deux autres composants,
et chacun des composants (120, 140) du serveur de temps (100), auquel un message de synchronisation externe a été envoyé, vérifie si le moment de réception externe contenu dans le message de synchronisation externe reçu, mesuré par rapport à l'état de son compteur de ticks local au moment de la réception du message de synchronisation externe, est fixé comme cela est prescrit par une planification *a priori* du moment de synchronisation externe et du moment de réception externe,
- et si ce n'est pas le cas, rejetant le message de synchronisation externe,
- et si c'est le cas, transmettant le message de synchronisation externe à un récepteur externe par l'intermédiaire d'un contrôleur de communication externe (194) du composant (120, 140) à un moment qui garantit que le message de synchronisation externe arrive au récepteur externe au moment de réception externe contenu dans le message de synchronisation externe,
et chaque récepteur externe enregistrant le moment de réception du premier message de synchronisation externe arrivant avec son horloge locale et ensuite corrigeant l'état de son horloge locale de la différence entre le moment enregistré de réception du message de synchronisation externe et le moment de réception externe contenu dans le message de synchronisation externe.

2. Procédé selon la revendication 1, dans lequel des composants (110, 130) qui génèrent un message de synchronisation externe munissent ce message de synchronisation externe d'une signature électronique et le récepteur de ce message de synchronisation externe vérifie, sur la base de cette signature électronique, si le message est valide et rejette le message s'il n'est pas valide.

3. Procédé selon la revendication 1 ou 2, dans lequel le premier composant (110) est connecté au quatrième composant (140) via un canal de communication bidirectionnel (111) et/ou le deuxième composant (120) est connecté au troisième composant (130) via un canal de communication bidirectionnel (121).

4. Procédé selon l'une quelconque des revendications 1 à 3, dans lequel le serveur de temps (100) comprend un récepteur GPS (150), et une heure GPS externe reçue via le récepteur GPS (150) est transmise périodiquement à un ou plusieurs des composants (110, 120, 130, 140) du serveur de temps.

5. Procédé selon la revendication 4, dans lequel le serveur de temps (100), par exemple un composant du serveur de temps (100) qui est relié au récepteur GPS (150), contrôle l'intensité de champ d'un signal incident sur le récepteur GPS, par lequel l'heure GPS externe est transmise au récepteur GPS (150), ou examine l'heure offerte pour détecter des changements brusques.

6. Procédé selon l'une quelconque des revendications 1 à 5, dans lequel l'intervalle de temps entre deux messages de synchronisation externes correspond à une puissance de la seconde SI.

7. Procédé selon l'une quelconque des revendications 1 à 6, dans lequel les messages de synchronisation externes (192) comprennent chacun un champ de données dans lequel des données relatives à l'état interne du serveur de temps (100) sont inclues.

8. Serveur de temps (100) pour fournir un temps global tolérant aux pannes à un système informatique distribué en temps réel, dans lequel
le serveur de temps (100) comprend quatre composants (110, 120, 130, 140), un premier composant (110), un deuxième composant (120), un troisième composant (130), et un quatrième composant (140),
où pour la transmission de messages, le premier composant (110) est connecté aux deuxième et troisième composants (120, 130) par l'intermédiaire d'un canal de communication bidirectionnel (190) respectif, et le quatrième composant (140) est connecté aux deuxième et troisième composants (120, 130) par l'intermédiaire d'un canal de communication bidirectionnel (190) respectif,
et chacun des quatre composants (110, 120, 130, 140) comprend un oscillateur et un compteur local de ticks,
où, après une mise sous tension, le compteur local de ticks de chaque composant (110, 120, 130, 140) est initialisé avec une valeur identique,
la valeur du compteur local de ticks d'un composant étant augmentée d'une valeur fixe à chaque période de l'oscillateur du composant,
dans une phase de démarrage après la mise sous tension du serveur de temps (100), l'un des quatre composants étant agencé pour envoyer un message de démarrage aux autres composants (120, 130, 140) avec un état actuel de son compteur de ticks local au moment de l'envoi du message de démarrage,
et chaque récepteur (110, 120, 130) du message de démarrage étant agencé pour régler son compteur local de ticks sur la valeur contenue dans le message de démarrage, corrigée d'un retard de transport connu *a priori* du message de démarrage,
et chaque composant (110, 120, 130, 140) étant agencé pour envoyer simultanément aux trois autres composants, à des moments de synchronisation interne périodiques définis *a priori*, un message de synchronisation interne contenant l'état de son compteur de ticks local au moment de l'envoi du message de synchronisation interne,
et chaque récepteur d'un message de synchronisation interne étant agencé pour conserver l'état de son compteur de ticks local au moment de réception du message de synchronisation interne, et pour déterminer la différence de temps entre le moment d'émission contenu dans le message de synchronisation interne et le moment de réception conservé du message de synchronisation interne, corrigée par le retard connu *a priori* du message de synchronisation interne,
et chaque ordinateur interne d'un composant étant agencé pour déterminer à partir de ces différences de temps, conformément à un algorithme de synchronisation d'horloge tolérant aux erreurs, un terme de correction pour le compteur de ticks contenu dans son composant et pour corriger l'état du compteur de ticks local en fonction de ce terme de correction,
et deux des quatre composants, par exemple le premier composant (110) et le troisième composant (130), étant agencés pour former chacun un message de synchronisation externe (192) qui contient un moment de réception externe fixé *a priori* de ce message de synchronisation externe, les deux messages de synchronisation externes contenant le même moment de réception externe, et pour envoyer ces messages de synchronisation externes simultanément à des moments de synchronisation externes périodiques fixés *a priori*, chacun par l'intermédiaire d'un canal de communication (190), directement à l'un des autres composants (120, 130), mais pas au même des deux autres composants,
et chacun des composants (120, 140) du serveur de temps (100), auquel un message de synchronisation externe a été envoyé, étant agencé pour vérifier si le moment de réception externe contenue dans le message de synchronisation externe reçu, mesurée par rapport à l'état de son compteur de ticks local au moment de la réception du message de synchronisation externe, est fixée comme cela est prescrit par une planification *a priori* du temps de synchronisation externe et du temps de réception externe,
- et si ce n'est pas le cas, étant agencé pour rejeter le message de synchronisation externe,
- et si c'est le cas, est agencé pour transmettre le message de synchronisation externe à un récepteur externe par l'intermédiaire d'un contrôleur de communication externe (194) du composant (120, 140) à un moment prédéterminé qui garantit que le message de synchronisation externe arrive au récepteur externe au moment de réception externe contenu dans le message de synchronisation externe.

9. Serveur de temps selon la revendication 8, dans lequel le serveur de temps est divisé en deux sous-systèmes physiquement séparés, chaque sous-système comportant un composant (110, 130) qui génère des messages de synchronisation externes et de préférence les signe, ainsi qu'un autre composant (120, 140) respectif qui reçoit ce message de synchronisation externe généré par l'autre composant de son sous-système, et ce dernier composant (120, 140) de chaque sous-système étant agencé pour envoyer le message de synchronisation externe à un récepteur externe.

10. Serveur de temps selon la revendication 8 ou 9, dans lequel les deux sous-systèmes sont séparés dans l'espace physique, par exemple suffisamment éloignés l'un de l'autre, pour qu'une cause de défaillance physique ne puisse affecter qu'un seul des deux sous-systèmes.

11. Serveur de temps selon la revendication 10, dans lequel les deux sous-systèmes disposent chacun d'une alimentation électrique indépendante.

12. Serveur de temps selon la revendication 10 ou 11, dans lequel un récepteur GPS est contenu dans chacun des sous-systèmes séparés ou un récepteur GPS propre est associé à chaque sous-système.

13. Serveur de temps selon l'une quelconque des revendications 8 à 12, dans lequel les contrôleurs de communication externes (194) sont agencés pour transmettre des messages seulement de manière unidirectionnelle dans le sens allant du serveur de temps vers les récepteurs externes du système temps réel.

14. Serveur de temps selon l'une quelconque des revendications 8 à 13, dans lequel des composants (110, 130) qui génèrent un message de synchronisation externe sont agencés pour munir ce message de synchronisation externe d'une signature électronique, de sorte qu'un récepteur de ce message de synchronisation externe peut vérifier, sur la base de cette signature électronique, si le message est valide et peut rejeter le message s'il n'est pas valide.

15. Serveur de temps selon l'une quelconque des revendications 8 à 14, dans lequel le premier composant (110) est connecté au quatrième composant (140) par un canal de communication bidirectionnel (111) et/ou le deuxième composant (120) est connecté au troisième composant (130) par un canal de communication bidirectionnel (121).

16. Système informatique en temps réel comportant un serveur de temps (100) selon l'une quelconque des revendications 8 à 15 ainsi que des récepteurs externes (210, 220, 230, 240) alimentés par le serveur de temps (100) avec le temps globale, chaque récepteur externe conservant le moment de réception du premier message de synchronisation externe entrant avec son horloge locale et ensuite corrigeant l'état de son horloge locale de la différence entre le moment enregistré de réception du message de synchronisation externe et le moment de réception externe contenu dans le message de synchronisation externe.
